# FASCICULE DE BREVET EUROPEEN

(11) **EP 2 108 007 B1**
(45) Date de publication et mention de la délivrance du brevet: **13.04.2016**
(21) Numéro de dépôt: 07858968.6
(22) Date de dépôt: 28.11.2007
(51) Int. Cl.: C04B 24/24, C04B 24/26, C04B 24/32

(54) **UTILISATION D'UN ADDITIF RHÉOLOGIQUE DANS LA FABRICATION PAR VIBROCOMPACTION D'UNE FORMULATION A BASE D'EAU ET DE LIANT HYDRAULIQUE, FORMULATION OBTENUE**
VERWENDUNG EINES RHEOLOGIEADDITIVS BEI DER VIBROVERDICHTUNGSHERSTELLUNG EINER WASSER UND EIN HYDRAULISCHES BINDEMITTEL ENTHALTENDEN FORMULIERUNG UND SO ERHALTENE FORMULIERUNG
USE OF A RHEOLOGIC ADDITIVE IN THE VIBRO-COMPACTION PRODUCTION OF A FORMULATION CONTAINING WATER AND A HYDRAULIC BINDER, AND FORMULATION THUS OBTAINED

(30) Priorité: 09.01.2007 FR 0700085
(43) Date de publication de la demande: 14.10.2009
(73) Titulaire: COATEX S.A.S., 69730 Genay (FR)
(72) Inventeur: KENSICHER, Yves, F-69620 Theize (FR); PLATEL, David, F-01800 Saint Maurice De Gourdans (FR)
(74) Mandataire: Fiorucci, Hélène
(86) Numéro de dépôt international: PCT/IB2007/003790
(87) Numéro de publication internationale: WO 2008/084298

(56) Documents cités:
- EP-A- 1 182 235
- EP-A1- 1 180 528
- WO-A-03/070658
- US-A1- 2006 054 056

## Description

La présente invention concerne le secteur technique des formulations à base d'eau et d'au moins un liant hydraulique, plus particulièrement celles obtenues par un procédé de fabrication mettant en oeuvre une étape de vibrocompaction et faisant intervenir un agent régulateur de rhéologie desdites formulations.

En vue d'obtenir une pièce à base d'eau et d'au moins un liant hydraulique, et à partir de la technique de vibrocompaction, on met en général en oeuvre :
1) une étape de fabrication d'une formulation contenant au moins un liant hydraulique, de l'eau, un additif rhéologique, et éventuellement des granulats et éventuellement d'autres additifs, par mélange de ces différents constituants,
2) une étape de repos de la formulation après mélange,
3) une étape d'introduction dans un moule de ladite formulation,
4) une étape qui est la combinaison d'une action de compression et d'une action de vibration exercées sur le moule,
5) une étape de sortie du moule de la pièce obtenue à l'issue de l'étape 4).

Cette technique est notamment décrite dans le document "Influence de l'adjuvantation sur les propriétés du béton de ciment poreux et drainant" (Matériaux et Constructions, vol. 33, décembre 2000, pp 647-54). La Demanderesse indique qu'à travers le terme "granulats", on entend désigner selon le vocable bien connu de l'homme du métier des charges, des sablons, des sables, des graves, des gravillons, des ballasts et leurs mélanges, tels que définie par la nonne française XP P 18-540 (ladite norme classe en fait ces matériaux à partir d'un certain nombre de caractéristiques telles que taille des grains ou classe granulaire, teneur en fines, module de finesse, propreté, indices de concassages éventuels, sensibilité au gel, dureté, etc... caractéristiques qu'il n'est pas essentiel de rappeler ici). L'additif rhéologique mis en oeuvre au cours de ce procédé doit procurer à la formulation un certain nombre de propriétés, au niveau de chacune des étapes qui caractérise ce procédé.

Pendant l'étape 1) de mélange, il est souhaitable que la formulation présente une excellente "fluidité", cette fluidité conditionnant la répartition homogène des différents constituants dans le mélange. Cette fluidité se traduit par une faible viscosité de la formulation pendant cette étape.

Après mélange, c'est-à-dire au cours de l'étape 2), la viscosité de la formulation doit augmenter.

Pendant l'étape 3) d'introduction de la formulation au sein du moule, il est souhaitable que ladite formulation possède un bon "écoulement" : cet écoulement traduit l'aptitude de ladite formulation à être déversée de manière continue dans le moule et ce, sans que sa viscosité n'augmente de manière trop importante : ceci pourrait notamment obstruer les tuyaux dans lesquels transite la formulation pour être introduite dans le moule, ou encore empêcher le remplissage complet du moule ce qui se traduit au final par des défauts à, la surface de la pièce ainsi fabriquée. En vue d'obtenir un bon écoulement, la viscosité de la formulation doit fortement diminuer pendant cette étape. De plus, cette diminution doit être la plus rapide possible, l'opération d'introduction de la formulation dans le moule ne durant que quelques secondes.

Au cours de l'étape 4) de vibrocompaction, où la formulation est soumise à d'importantes contraintes de cisaillement (action de vibration) et de pression (action de compaction), on recherche une excellente "fluidité", ce qui se traduit pendant cette étape par une faible valeur de la viscosité de la formulation :
- ce qui permet à la formulations d'épouser parfaitement la surface interne du moule dans lequel elle est introduite d'une part, sans quoi on pourrait observer des défauts à la surface de la pièce finale,
- et ce qui permet d'obtenir au sein du moule un matériau présentant une excellente compacité d'autre part, ce qui conduit à une amélioration des propriétés de résistance mécanique de la pièce finale.

La Demanderesse précise que cette compacité traduit à la fois une répartition homogène des différents constituants de la formulation au sein du moule, ainsi qu'une porosité réduite au sein de la pièce finale, de même qu'un nombre réduit de défauts macroscopiques (comme des zones à forte concentration en liant, ou en granulats lorsque ces derniers sont présents dans la formulation). D'autre part, les étapes d'introduction dans le moule et de vibrocompaction ne durant au total que quelques dizaines de secondes, il est très important que la viscosité de la formulation passe rapidement d'une valeur élevée (état au repos) à une valeur faible (étapes d'introduction dans le moule et de vibrocompaction).

Enfin, suite à l'opération 5) de démoulage, on souhaite obtenir une pièce finale :
- "non collante", c'est-à-dire qui n'adhère pas aux parois internes du moule, afin de ne pas créer des défauts de surface,
- et "cohésive", c'est-à-dire qu'elle conserve la compacité qu'elle a acquise pendant l'étape de vibrocompaction : on cherche alors à obtenir une augmentation la plus rapide possible de la viscosité de la formulation en vue d'obtenir le plus rapidement possible la cohésion de la pièce finale.

Ainsi, l'ensemble de ces propriétés peut être résumé par :
- une viscosité élevée de la formulation en absence de contrainte (étapes de repos et de démoulage),
- une faible viscosité de ladite formulation en présence d'une contrainte de cisaillement élevée (étapes de mélangé, d'introduction de la formulation dans le moule et de vibrocompaction),
- un passage très rapide d'une faible viscosité sous haut cisaillement à une viscosité élevée sous faible cisaillement pour cette formulation, et inversement,
- un aspect non collant et cohésif de la pièce finale à la sortie du moule,
ce qu'on qualifiera désormais de "problème technique complexe" résolu dans la présente Demande.

Poursuivant ses recherches en vue d'améliorer l'ensemble de ces propriétés, la Demanderesse a mis au point l'utilisation d'un additif rhéologique, dans un procédé de fabrication par vibrocompaction d'une formulation à base d'eau et d'au moins un liant hydraulique, caractérisée en ce que ledit additif est une émulsion d'au moins un copolymère non réticulé constitué :
a) d'acide (méth)acrylique,
b) de (méth)acrylate d'alkyle ayant de 1 à 25 atomes de carbone, ce méthacrylate d'alkyle étant préférentiellement le (méth)acrylate d'éthyle,
c) d'un monomère de formule R₁ - (R₂O)ₘ- R₃, où :
   - R₁ désigne un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
   - R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
   - m est un entier compris entre 20 et 30, préférentiellement entre 23 et 27, et est très préférentiellement égal à 25,
   - R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

L'examen de l'état de la technique en vue de résoudre le "problème technique complexe" obiet de la présente Demande. va démontrer qu'aucun des documents accessibles à l'homme du métier ne dévoile ni ne suggère la solution objet de la présente invention.

L'homme du métier connaît le document US 6 573 326, qui décrit des épaississants à base de copolymères de l'alcool vinylique partiellement saponifié, pouvant être mis en oeuvre dans la fabrication de matrices contenant un liant hydraulique. Ce document révèle des mesures d'étalement d'une composition cimentaire, effectuées après vibration de ladite composition : l'épaississant selon cette invention permet de diminuer la valeur de l'étalement.

L'homme du métier connaît aussi le document US 2005 / 011416, qui décrit l'utilisation d'un couple constitué d'un agent épaississant et d'un additif hydrophobe, dans la fabrication d'articles à base de ciment, notamment à travers la méthode de vibrocompaction. L'agent épaississant est choisi parmi les acides carboxyliques, les poly(méth)acrylates, polyuréthannes, polyéthers, alginates, polyoses, polyimines, polyamides, les dérivés de cellulose, l'acide silicique, alors que l'additif hydrophobe est choisi parmi les (hydro)silanes, les siloxanes, les silicones, les siliconates, les fluorosilicates, les acides gras, les cires, les résines époxydes, acryliques, polyuréthannes, les silicates de sodium et les esters de l'acide silicique. Il est indiqué que la mise en oeuvre de ce couple permet, lors de la fabrication d'une pièce en ciment par vibrocompaction, d'obtenir un produit final homogène, qui ne colle pas au moule et présentant une bonne résistance mécanique.

On connaît aussi le document FR 2 836 141 qui, par rapport aux précédents documents, attire l'attention de l'homme du métier sur un certain type de polymères qui permettent de conférer des performances avantageuses aux produits cimentaires fabriqués par vibrocompaction. Ces polymères sont constitués d'acide (méth)acrylique, de (méth)acrylate d'alkyle, et d'un troisième monomère disposant d'une fonction polymérisable et qui est terminé par une chaîne grasse et / ou hydrophobe. Le mécanisme de fonctionnement de tels polymères n'est pas abordé dans ce document ; il sera explicité en détail lorsqu'on discutera l'enseignement du document US 2006 / 054056, qui propose une explication détaillée de ce mécanisme.

Ainsi, le document FR 2 836 141 décrit-il des compositions à base de liants hydrauliques extrudables ou pressables dans lesquelles le rapport eau / liant est inférieur ou égal à 0,25, et comprenant un agent de rhéologie constitué d'acide méthacrylique, d'un méthacrylate d'alkyle qui est préférentiellement le (méth)acrylate d'éthyle, et d'un tiers monomère comprenant une fonction insaturée polymérisable et une chaîne du type :

-COO-(RₜO)ₘ-R_{z} ou -CO-N(Rₚ)-(RₜO)ₘ-R_{z}

- R_{z} étant un groupe alkyle linéaire ou ramifié ayant de 1 à 35 atomes de carbone,
- Rₜ est un groupe alkylène ayant de 1 à 6 atomes de carbone,
- Rₚ est H ou un groupe alkyle ayant de 1 à 8 atomes de carbone,
- m est compris entre 1 et 50.

Les exemples et les revendications de ce document démontrent que les tiers monomères préférés possèdent des chaînes ayant de 5 à 35 motifs éthoxylés et un groupement hydrophobe ayant de 18 à 35 atomes de carbone, les tiers monomères les plus préférés étant le méthacrylate de béhénylétherpolyéthylène glycol et le méthacrylate de méthoxypolyéthylène glycol ayant de 10 à 35 motifs éthoxylés. Les avantages procurés par de tels polymères sont des performances mécaniques améliorées, une meilleure compacité et l'absence de défauts de surface.

Toutefois, aucun des 3 documents précédents (US 6573 326, US 2005 / 011416, FR 2 836 141) ne vise à résoudre le "problème technique complexe" objet de la présente Demande. La Demanderesse indique que le document faisant office d'état de la technique le plus proche est le document US 2006 / 054056. Ce document enseigne la mise en oeuvre, notamment dans la fabrication par vibrocompaction de pièces contenant un liant hydraulique, de différents additifs chimiques qui sont notamment des polymères associatifs.

La Demanderesse souhaite indiquer que les mécanismes d'action et les caractéristiques des épaississants associatifs, tels que les épaississants associatifs de type HASE (hydrophobically alkali swellable emulsions), sont aujourd'hui bien connus, mais ont été essentiellement décrits dans un domaine très éloigné de celui de la présente Demande : celui des peintures. On peut ainsi se référer aux documents "Rheology modifiers for water-borne paints" (Surface Coatings Australia, 1985, pp. 6-10) et "Rheological modifiers for water-based paints : the most flexible tools for your formulations" (Eurocoat 97, UATCM, vol. 1, pp 423-442). Ces épaississants associatifs sont des polymères hydrosolubles disposant de groupements hydrophobes insolubles. Une fois de telles molécules introduites dans l'eau, les groupements hydrophobes qu'elles contiennent sont susceptibles de s'assembler sous forme d'agrégats micellaires. Ces agrégats sont reliés entre eux par les parties hydrophiles des polymères : il y a alors formation d'un réseau tridimensionnel qui provoque l'augmentation de la viscosité du milieu. En présence d'une contrainte, il y a destruction du réseau tridimensionnel et on observe une diminution de la viscosité du milieu.

Tel qu'indiqué dans le document US 2006 / 0054056, de tels polymères ne développent pas de propriétés épaississantes en présence de cisaillement : la formulation est donc très fluide pendant l'étape de vibrocompaction, ce qui améliore sa compacité (réduction de la porosité, du nombre de défauts macroscopiques, répartition homogène des constituants de la formulation). Lorsque cesse la contrainte, le mécanisme d'épaississement associatif se développe et on obtient une formulation parfaitement cohésive, ce qui lui permet de conserver sa compacité et de présenter une résistance à la compression améliorée.

Aussi, le document US 2006 / 0054056 a bien pour objet d'obtenir un bon écoulement de la formulation au sein du moule, une bonne fluidité de ladite formulation pendant la vibrocompaction, et un aspect non collant et cohésif de la pièce finale à la sortie du moule : on n'observe pas de morceaux collés sur les parois internes du moule, ni des défauts à la surface de la pièce fabriquée. On notera cependant que le problème technique complexe objet de la présente Demande n'est que partiellement résolu : en effet, le document US 2006 / 0054056 ne cherche pas à améliorer la rapidité de la transition entre une faible viscosité sous haut cisaillement et une viscosité élevée sous faible cisaillement, et inversement. Il s'agit pourtant d'une propriété fondamentale pour l'homme du métier, puisqu'elle caractérise l'aptitude d'une formulation à acquérir rapidement un degré de cohésion élevé (lorsque la pièce est démoulée), et son aptitude à être rapidement mise en oeuvre dans le moule (lors du remplissage et de la vibrocompaction). Comme on le verra par la suite, non seulement le document US 2006 / 0054056 ne cherche pas à résoudre ce problème, mais les polymères particuliers qu'il dévoile ne permettent pas la résolution de ce problème.

Les polymères mis en oeuvre dans ce document sont essentiellement des épaississants utilisés dans le domaine des peintures, tels que des épaississants acryliques classiques comme le Caibopol™ (NOVEON™), ou des épaississants associatifs acryliques appartenant aux gammes Aquaflow™ (HERCULES™), Acrysol™ et Acusol™ (ROHM & HAAS™), les produits préférés et mis en oeuvre dans les exemples étant l'Acrysol™ TT 935 (3 exemples sur 4) et à moindre degré le Carbopol™ Aqua 30 (1 exemple sur 4). L'Acrysol™ TT 935 est un produit constitué d'acide méthacrylique, d'acrylate d'éthyle, et d'un tiers monomère avec une fonction polymérisable, disposant d'un maillon avec 20 motifs oxyéthylés et d'une chaîne grasse ayant 18 atomes de carbone. Le Carbopol™ Aqua 30 est un épaississant acrylique réticulé.

La Demanderesse, poursuivant ses recherches en vue d'améliorer, pour une formulation contenant de l'eau et au moins un liant hydraulique, l'ensemble des propriétés suivantes :
- viscosité élevée de la formulation en absence de contrainte (étapes de repos et de démoulage),
- faible viscosité de la formulation en présence d'une contrainte de cisaillement élevée (étapes de mélange, d'introduction de la formulation dans le moule et de vibrocompaction),
- passage très rapide d'une faible viscosité sous haut cisaillement à une viscosité élevée sous faible cisaillement, et inversement,
- aspect non collant et cohésif de la pièce finale à la sortie du moule,
a mis au point l'utilisation, dans un tel procédé de fabrication, d'un additif rhéologique caractérisé en ce qu'il est une émulsion d'au moins un copolymère non réticulé et constitué :
a) d'acide (méth)acrylique,
b) de (méth)acrylate d'alkyle ayant de 1 à 25 atomes de carbone, préférentiellement de 1 à 4 atomes de carbone, ce méthacrylate d'alkyle étant préférentiellement le (méth)acrylate d'éthyle,
c) d'un monomère de formule R₁-(R₂O)ₘ-R₃, où :
   - R₁ désigne un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
   - R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
   - m est un entier compris entre 20 et 30, préférentiellement entre 23 et 27, et est très préférentiellement égal à 25,
   - R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

De manière tout à fait surprenante, ces copolymères permettent d'améliorer les propriétés visées par le problème technique complexe objet de la présente Demande.

Un des mérites de la Demanderesse est d'avoir su identifier, par rapport au document FR 2 836 141, des intervalles préférentiels pour le monomère c) au niveau de la longueur de la chaîne oxyde d'alkylène d'une part, et au niveau de la longueur de la chaîne alkyle d'autre part. Le choix de ces intervalles apparaît également comme une sélection par rapport au document US 2006 / 054056, dont l'enseignement général consiste à dévoiler la mise en oeuvre de polymères acryliques dont certains sont réticulés et d'autres sont associatifs, dans une fabrication par vibrocompaction d'une formulation contenant de l'eau et au moins un liant hydraulique.

Un autre des mérites de la Demanderesse repose sur l'étroitesse des intervalles qu'elle propose. Il apparaît en effet que les sélections selon la présente invention sont très restreintes par rapport a l'enseignement général du document US 2006 / 054056 portant sur l'emploi de polymères acryliques réticulés ou associatifs, et par rapport aux larges intervalles indiqués dans le document FR 2 836 141, où on indique de 1 à 50 motifs oxyéthylés et de 1 à 35 atomes de carbone dans le groupe terminal du troisième monomère.

Enfin, un autre mérite de la Demanderesse repose sur les valeurs particulières qui délimitent ces intervalles : ces valeurs très particulières définissent un ensemble de polymères qui, de manière tout à fait surprenante et bien plus avantageuse que les polymères cités préférentiellement dans les documents FR 2 836 141 et US 2006 / 054056, améliorent nettement le comportement rhéologique des compositions à base de liant hydraulique dans lesquelles ils sont mis en oeuvre. Les exemples de la présente Demande démontrent notamment que les polymères de la présente invention permettent :
- d'augmenter de manière bien plus importante que les polymères préférés et divulgués dans les documents FR 2 836 141 et US 2006 / 054056, la valeur de la viscosité de la formulation lorsque celle-ci est soumise à un faible cisaillement,
- et surtout de passer de façon beaucoup plus rapide que les polymères préférés et divulgués dans les documents FR 2 836 141 et US 2006 / 054056, d'une faible viscosité sous haut cisaillement à une viscosité élevée sous faible cisaillement, et inversement,
tout en conduisant à une très faible viscosité sous haut cisaillement, et en permettant, d'obtenir des pièces cohésives et non collantes.

Aussi, un premier objet de l'invention consiste en l'utilisation d'un additif rhéologique, dans un procédé de fabrication par vibrocompaction d'une formulation contenant de l'eau et au moins un liant hydraulique, cette utilisation étant caractérisée en ce que ledit additif est une émulsion d'au moins un copolymère non réticulé et constitué :
a) d'acide (méth)acrylique,
b) de (méth)acrylate d'alkyle ayant de 1 à 25 atomes de carbone, préférentiellement de 1 à 4 atomes de carbone, ce méthacrylate d'alkyle étant préférentiellement le (méth)acrylate d'éthyle,
c) d'un monomère de formule R₁-(R₂O)ₘ-R₃, où :
   - R₁ désigne un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
   - R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
   - m est un entier compris entre 20 et 30, préférentiellement entre 23 et 27, et est très préférentiellement égal à 25,
   - R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

La Demanderesse indique que, l'expression "additif rhéologique" est parfaitement définie, en ce sens qu'elle renvoie à un composé permettant d'améliorer l'ensemble des propriétés suivantes :
- viscosité élevée en absence de contrainte (étapes de repos et de démoulage),
- faible viscosité en présence d'une contrainte de cisaillement élevée (étapes de mélange, d'introduction de la formulation dans le moule et de vibrocompaction),
- passage très rapide d'une faible viscosité sous haut cisaillement à une viscosité élevée sous faible cisaillement, et inversement,
- aspect non collant et cohésif de la pièce finale à la sortie du moule.

Cette utilisation d'un additif rhéologique qui est une émulsion d'au moins un copolymère non réticulé, est aussi caractérisée en ce que ledit copolymère est constitué, exprimé en pourcentage en poids de chacun des constituants (le total a + b + c étant égal à 100 %), de:
a) 25 % à 60 %, préférentiellement 30 % à 50 % d'acide (méth)acrylique,
b) 40 % à 75 %, préférentiellement 50 % à 70 % de (méth)acrylate d'alkyle ayant de 1 à 25 atomes de carbone, préférentiellement de 1 à 4 atomes de carbone, ce méthacrylate d'alkyle étant préférentiellement le (méth)acrylate d'éthyle,
c) 1 % à 20 %, préférentiellement 5 % à 15 % d'un monomère de formule R₁-(R₂O)ₘ-R₃, où :
   - R₁ désigne un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
   - R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
   - m est un entier compris entre 20 et 30, préférentiellement entre 23 et 27, et est très préférentiellement égal à 25,
   - R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

Cette utilisation d'un additif rhéologique qui est une émulsion d'au moins un copolymère non réticulé, est aussi caractérisée en ce que ledit copolymère est totalement ou partiellement neutralisé par au moins un agent de neutralisation, choisi parmi les hydroxydes et / ou oxydes de calcium, de magnésium, de lithium, de baryum, les hydroxydes de sodium, de potassium, ou l'ammoniaque, les amines primaires, secondaires, ou tertiaires, et leurs mélanges.

Cette utilisation d'un additif rhéologique qui est une émulsion d'au moins un copolymère non réticulé, est aussi caractérisée en ce que ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Cette utilisation d'un additif rhéologique, dans un procédé de fabrication par vibrocompaction d'une formulation contenant de l'eau et au moins un liant hydraulique, est aussi caractérisée en ce que le rapport eau / liant hydraulique (E/L) est strictement supérieur à 0,25, préférentiellement 0,30, très préférentiellement 0,35.

Cette utilisation d'un additif rhéologique, dans un procédé de fabrication par vibrocompaction d'une formulation contenant de l'eau et au moins un liant hydraulique, est aussi caractérisée en ce que ladite formulation contient de 0,05 % à 3 %, préférentiellement de 0,1 % à 2 %, très préférentiellement de 0,1 % à 1,5 % en poids sec dudit additif rhéologique par rapport au poids sec de liant hydraulique.

Cette utilisation d'un additif rhéologique, dans un procédé de fabrication par vibrocompaction d'une formulation contenant de l'eau et au moins un liant hydraulique, est aussi caractérisée en ce que ladite formulation contient aussi des granulats.

Cette utilisation d'un additif rhéologique, dans un procédé de fabrication par vibrocompaction d'une formulation contenant de l'eau et au moins un liant hydraulique, est aussi caractérisée en ce que ladite formulation contient aussi un autre additif choisi parmi un plastifiant, un superplastifiant, un dispersant, un antimousse ou leurs mélanges.

Cette utilisation d'un additif rhéologique, dans un procédé de fabrication par vibrocompaction d'une formulation contenant de l'eau et au moins un liant hydraulique, est aussi caractérisée en ce que ledit procédé comporte :
1) une étape de fabrication d'une formulation contenant au moins un liant hydraulique, de l'eau, éventuellement des granulats et éventuellement d'autres additifs choisis parmi un plastifiant, un superplastifiant, un dispersant, un antimousse ou leurs mélanges, par mélange de ces différents constituants,
2) une étape de repos de la formulation après mélange,
3) une étape d'introduction dans un moule de ladite formulation,
4) une étape qui est la combinaison d'une action de compression et d'une action de vibration exercées sur le moule,
5) une étape de sortie du moule de la pièce obtenue à l'issue de l'étape 4).

Cette utilisation d'un additif rhéologique, dans un procédé de fabrication par vibrocompaction d'une formulation contenant de l'eau et au moins un liant hydraulique, est enfin caractérisée en ce que ledit liant hydraulique est choisi parmi la chaux, le ciment, le plâtre, les cendres volantes, les déchets sidérurgiques, les silicates solubles, les argiles, les zéolithes et leurs mélanges.

Un autre objet de l'invention est une formulation contenant de l'eau et au moins un liant hydraulique, ainsi qu'un additif rhéologique caractérisé en ce qu'il est une émulsion d'au moins un copolymère non réticulé constitué :
a) d'acide (méth)acrylique,
b) de (méth)acrylate d'alkyle ayant de 1 à 25 atomes de carbone, préférentiellement de 1 à 4 atomes de carbone, ce méthacrylate d'alkyle étant préférentiellement le (méth)acrylate d'éthyle,
c) d'un monomère de formule R₁-(R₂O)ₘ-R₃, où :
   - R₁ désigne un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
   - R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
   - m est un entier compris entre 20 et 30, préférentiellement entre 23 et 27, et est très préférentiellement égal à 25,
   - R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

Cette formulation est aussi caractérisée en ce que ledit copolymère non réticulé est constitué, exprimé en pourcentage en poids de chacun des constituants (le total a + b + c étant égal à 100 %) de :
a) 25 % à 60 %, préférentiellement 30 % à 50 % d'acide (méth)acrylique,
b) 40 % à 75 %, préférentiellement 50 % à 70 % de (méth)acrylate d'alkyle ayant de 1 à 25 atomes de carbone, préférentiellement de 1 à 4 atomes de carbone, ce méthacrylate d'alkyle étant préférentiellement le (méth)acrylate d'éthyle,
c) 1 % à 20 %, préférentiellement 5 % à 15 % d'un monomère de formule R₁-(R₂O)ₘ-R₃, où :
   - R₁ désigne un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
   - R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
   - m est un entier compris entre 20 et 30, préférentiellement entre 23 et 27, et est très préférentiellement égal à 25,
   - R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

Cette formulation est aussi caractérisée en ce que ledit copolymère non réticulé est totalement ou partiellement neutralisé par au moins un agent de neutralisation, choisi parmi les hydroxydes et / ou oxydes de calcium, de magnésium, de lithium, de baryum, les hydroxydes de sodium, de potassium, ou l'ammoniaque, les amines primaires, secondaires, ou tertiaires, et leurs mélanges.

Cette formulation est aussi caractérisée en ce que ledit copolymère non réticulé est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Cette formulation contenant de l'eau et au moins un liant hydraulique, ainsi qu'un additif rhéologique, est aussi caractérisée en ce que le rapport eau / liant hydraulique (E/L) est strictement supérieur à 0,25, préférentiellement 0,30, très préférentiellement 0,35.

Cette formulation contenant de l'eau et au moins un liant hydraulique, ainsi qu'un additif rhéologique, est aussi caractérisée en ce qu'elle contient de 0,05 % à 3 %, préférentiellement de 0,1 % à 2 %, très préférentiellement de 0,1 % à 1,5 % en poids sec dudit additif rhéologique par rapport au poids sec de liant hydraulique.

Cette formulation contenant de l'eau et au moins un liant hydraulique, ainsi qu'un additif rhéologique, est aussi caractérisée en ce qu'elle contient aussi des granulats.

Cette formulation contenant de l'eau et au moins un liant hydraulique, ainsi qu'un additif rhéologique, est aussi caractérisée en ce qu'elle contient aussi un autre additif choisi parmi un plastifiant, un superplastifiant, un dispersant, un antimousse ou leurs mélanges.

Cette formulation contenant de l'eau et au moins un liant hydraulique, ainsi qu'un additif rhéologique, est aussi caractérisée en ce qu'elle est obtenue par un procédé dé vibrocompaction comportant :
1) une étape de fabrication d'une formulation contenant au moins un liant hydraulique, de l'eau, éventuellement des granulats et éventuellement d'autres additifs choisis parmi un plastifiant, un superplastifiant, un dispersant, un antimousse ou leurs mélanges, par mélange de ces différents constituants,
2) une étape de repos de la formulation après mélange,
3) une étape d'introduction dans un moule de ladite formulation,
4) une étape qui est la combinaison d'une action de compression et d'une action de vibration exercées sur le moule,
5) une étape de sortie du moule de la pièce obtenue à l'issue de l'étape 4).

Cette formulation contenant de l'eau et au moins un liant hydraulique, ainsi qu'un additif rhéologique, est enfin caractérisée en ce que ledit liant hydraulique est choisi parmi la chaux, le ciment, le plâtre, les cendres volantes, les déchets sidérurgiques, les silicates solubles, les argiles, les zéolithes et leurs mélanges.

Les exemples suivants illustrent l'invention sans toutefois en limiter la portée.

### EXEMPLES

### Exemple 1

Cet exemple illustre l'utilisation de polymères selon l'invention et selon l'art antérieur, dans des formulations contenant lesdits polymères, de l'eau et de l'hydroxyde de calcium. On indique que l'hydroxyde de calcium a pour but de reproduire le milieu fortement alcalin et calcique rencontré dans une formulation de liant hydraulique telle que celle utilisée pour la fabrication des blocs.

Ces formulations sont soumises à des contraintes rhéologiques permettant de simuler la succession des étapes du procédé industriel de vibrocompaction, à savoir :
1) une étape de fabrication de la formulation par mélange des différents constituants,
2) une étape de repos de la formulation après mélange,
3) une étape d'introduction dans un moule de ladite formulations,
4) une étape qui est la combinaison d'une action de compression et d'une action de vibration exercées sur le moule,
5) une étape de sortie du moule de la pièce obtenue à l'issue de l'étape 4).

Pour chacun des essais n° 1 à 7, on commence par préparer une formulation selon le mode opératoire suivant.

Dans un bécher de 300 ml on pèse 181,3 g d'eau industrielle puis on ajoute 2 g d'hydroxyde de calcium sous agitation modérée. Après 3 minutes d'agitation, on ajoute alors 5 g en poids sec du polymère à tester tout en maintenant l'agitation. Après cet ajout, la formulation est homogénéisée pendant 5 minutes puis stockée pendant 15 heures. Passé ce délai, une série de mesures rhéologiques est effectuée au moyen d'un rhéomètre commercialisé par la société Haake™ sous le nom de Rheostress™ RS 600. A cet effet, le rhéomètre est équipé d'un module de mesure du type plan / plan d'un diamètre de 60 mm. Sur ce module, on dépose environ 2 ml de la formulation puis on règle l'écartement entre les deux surfaces à 0,5 mm.

On effectue alors les cycles suivants :
- application d'un faible cisaillement correspondant à une contrainte égale à 5 Pascals pendant 180 secondes : cette phase correspond aux étapes de stockage après mélange des constituants (étape 2) et de démoulage (étape 5),
- application d'un fort cisaillement correspondant à une contrainte égale à 200 Pascals pendant 30 secondes : cette phase correspond aux étapes de mélange (étape 1) et d'introduction dans le moule et de vibrocompaction (étapes 4 et 5).

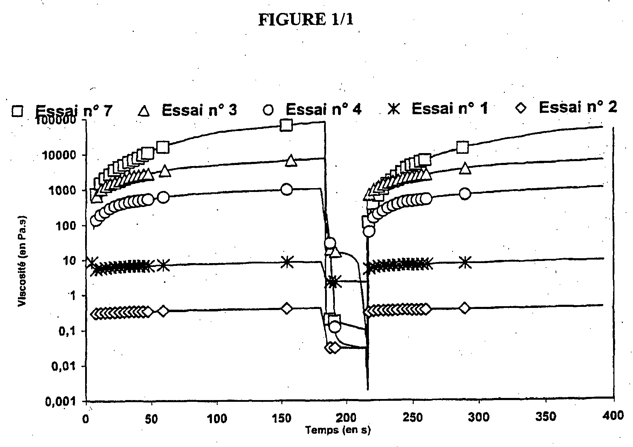

L'évolution de la viscosité est représentée sur la figure 1/1.

En ce qui concerne la synthèse des polymères selon l'invention, on a d'abord indiqué 3 protocoles (a, b et c) de fabrication des monomères de formule R₁-(R₂O)ₘ-R₃.

On fabrique ensuite les polymères selon l'invention à partir de 2 protocoles A et B.

### Protocole a : Synthèse de monomère méthacrylique

Dans un réacteur de 1 litre, on pèse :
- 400 grammes de l'alcool ayant 32 atomes de carbone et condensé avec 25 moles d'oxyde d'éthylène fondu,
- 0,0994 gramme d'alloocimène,
- 43,75 grammes d'anhydride méthacrylique.

On chauffe le mélange à 82°C ± 2°C et on poursuit la cuisson pendant 3 heures à cette température. Le macromonomère obtenu est alors dilué avec 396 g d'acide méthacrylique afin d'obtenir une solution liquide à température ambiante.

### Protocole b : Synthèse de monomère uréthanne

Dans une première étape, on réalise un précondensat en pesant dans un erlen :
- 13,726 grammes de toluène di isocyanate,
- 36,1 grammes d'acrylate d'éthyle,
- 0,077 gramme d'alloocimène,
- 0,198 gramme de dilaurate de dibuthyle d'étain.

On pèse ensuite dans une ampoule 10,257 grammes de méthacrylate d'éthylène glycol et 10 grammes d'acrylate d'éthyle. On introduit le contenu de cette ampoule dans l'erlen en 20 minutes à une température inférieure à 35°C, et on laisse réagir le mélange pendant 30 minutes.

Dans une deuxième étape, on réalise la condensation en pesant 132 grammes de tri styryl phénol condensé avec 25 moles d'oxyde d'éthylène dans un réacteur de 1 000 mL que l'on maintiendra fondu à 65°C. On introduit alors le précondensat en 20 minutes à 65°C dans le réacteur de 1 000 mL puis on cuit 2 heures à 65°C. Enfin, on dilue le mélange avec 15,5 grammes d'acrylate d'éthyle et 84,6 grammes d'eau bi permutée afin d'obtenir un liquide à température ambiante.

### Protocole c : Synthèse de monomère hémimaléate

Dans un réacteur de 1 litre on pèse :
- 400 grammes de l'alcool ayant 32 atomes de carbone et condensé avec 25 moles d'oxyde d'éthylène fondu,
- 0,0994 gramme d'alloocimène,
- 25,3 grammes d'anhydride maléique.

On chauffe le mélange à 82°C ± 2°C et on poursuit la cuisson pendant 3 heures. Le macromonomère alors obtenu est dilué avec 425 g d'acide méthacrylique afin d'obtenir une solution liquide à température ambiante.

### Protocole A

Dans un réacteur de 1 litre on pèse 280 grammes d'eau bi permutée et 3,89 grammes de dodecyl sulfate de sodium. On chauffe en pied de cuve à 82°C ± 2°C. Pendant ce temps, on prépare une pré émulsion, en pesant dans un bécher :
- 112,4 grammes d'eau bi permutée,
- 2,1 grammes de dodecyl sulfate de sodium,
- 80,6 grammes d'acide méthacrylique,
- 146,1 grammes d'acrylate d'éthyle,
- 55,6 grammes d'une solution de macromonomère telle que décrite dans le protocole a).

On pèse ensuite 0,85 gramme de persulfate d'ammonium dilués dans 10 grammes d'eau bi permutée pour le premier catalyseur, et 0,085 gramms de métabisulfite de sodium dilués dans 10 grammes d'eau bi permutée pour le second catalyseur. Lorsque le pied de cuve est à température, on ajoute les 2 catalyseurs et on effectue la polymérisation pendant 2 heures à 762°C ± 2°C, avec ajout en parallèle de la pré émulsion. On rince la pompe avec 20 grammes d'eau bi permutée et on cuit 1 heure à 76°C ± 2°C. On refroidit enfin à température ambiante et on filtre le polymère ainsi obtenu.

### Protocole B

Dans un réacteur de 1 litre on pèse 280 grammes d'eau bi permutée et 3,89 grammes de dodecyl sulfate de sodium. On chauffe en pied de cuve à 822°C ± 2°C.

Pendant ce temps, on prépare une pré émulsion, en pesant dans un bécher :
- 334 grammes d'eau bi permutée,
- 3,89 grammes de dodecyl sulfate de sodium,
- 80,6 grammes d'acide méthacrylique,
- 160,55 grammes d'acrylate d'éthyle,
- 60,4 grammes de la solution de méthacryluréthanne décrite dans le protocole b).

On pèse ensuite 0,33 gramme de persulfate d'ammonium dilués dans 10 grammes d'eau bi permutée pour le premier catalyseur, et 0,28 gramme de métabisulfite de sodium dilués dans 10 grammes d'eau bi permutée pour le second catalyseur. Lorsque le pied de cuve est à température, on ajoute les 2 catalyseurs et on effectue la polymérisation pendant 2 heures à 84°C ± 2°C, avec ajout en parallèle de la pré émulsion. On rince la pompe avec 20 grammes d'eau bi permutée et on cuit 1 heure à 84°C ± 2°C. On refroidit enfin à température ambiante et on filtre.

### Essai n° 1

Cet essai illustre l'art antérieur, et plus particulièrement un des polymères décrits et préférés dans le document US 2006 / 054056 : il met en oeuvre le Carbopol™ Aqua 30, qui est un polymère épaississant acrylique réticulé.

### Essai n° 2

Cet essai illustre l'art antérieur, et plus particulièrement un des polymères décrits et préférés dans le document US 2006 / 054056 : il met en oeuvre l'Acrysol™ TT 935, qui est un copolymère épaississant acrylique associatif constitué :
a) d'acide méthacrylique,
b) d'acrylate d'éthyle,
c) et d'un tiers monomère possédant une chaîne oxyéthylée ayant 20 motifs d'oxyde d'éthylène et terminée par un groupement hydrophobe ayant 18 atomes de carbone.

### Essai n° 3

Cet essai illustre l'art antérieur, et met en oeuvre un copolymère décrit par exemple dans le document WO 03 / 070658, et constitué :
a) 36,8 % d'acide méthacrylique,
b) 52,0 % d'acrylate d'éthyle,
c) 11,2 % d'un monomère de formule R₁-(R₂O)ₘ-R₃, où :
   - R₁ représente le groupe méthacrylate,
   - R₂O désigne un groupe d'oxyde d'éthylène,
   - m est égal à 25,
   - R₃ désigne une chaîne alkyle linéaire ayant 22 atomes de carbone.

### Essai n° 4

Cet essai illustre l'art antérieur, et met en oeuvre un copolymère décrit par exemple dans le document WO 03 / 070658, et constitué :
a) 36,0 % d'acide méthacrylique,
b) 53,7 % d'acrylate d'éthyle,
c) 10,3% d'un monomère de formule R₁-(R₂O)ₘ-R₃, où:
   - R₁ représente le groupe méthacrylate,
   - R₂O désigne un groupe d'oxyde d'éthylène,
   - m est égal à 25,
   - R₃ désigne une chaîne alkyle ramifiée ayant 20 atomes de carbone.

### Essai n° 5

Cet essai illustre l'art antérieur, et met en oeuvre un copolymère constitué de :
a) 38,1 % d'acide méthacrylique,
b) 54,2 % d'acrylate d'éthyle,
c) 10,3 % d'un monomère qui est un méthacrylate de méthoxypolyéthylène glycol ayant 25 motifs d'oxyde d'éthylène et de poids moléculaire égal à 1 100 g/mole,
tel que décrit par exemple dans le document FR 2 836 141 .

### Essai n° 6

Cet essai illustre l'art antérieur, et met en oeuvre un copolymère décrit par exemple dans le document WO 03 / 070658, et constitué de :
a) 38,1 % d'acide méthacrylique,
b) 54,2 % d'acrylate d'éthyle,
c) 10,3 % d'un monomère de formule R₁-(R₂O)ₘ-R₃, où :
   - R₁ représente le groupe méthacrylate,
   - R₂O désigne un groupe d'oxyde d'éthylène,
   - m est égal à 30,
   - R₃ désigne une chaîne alkyle ramifiée ayant 26 atomes de carbone.

### Essai n° 7

Cet essai illustre l'invention, et met en oeuvre un copolymère constitué de :
a) 38,1 % d'acide méthacrylique,
b) 54,2 % d'acrylate d'éthyle,
c) 7,7 % d'un monomère de formule R₁-(R₂O)ₘ-R₃, où :
   - R₁ représente le groupe méthacrylate,
   - R₂O désigne un groupe d'oxyde d'éthylène,
   - m est égal à 25,
   - R₃ désigne une chaîne alkyle ramifiée ayant 32 atomes de carbone.

Ce copolymère est obtenu à partir du protocole de synthèse a) pour le monomère de formule R₁-(R₂O)ₘ-R₃, et à partir du protocole de synthèse A) (dans lequel l'homme du métier a calculé les masses de différents constituants en fonction des ratio monomériques recherchés) pour ledit copolymère.

En premier lieu, la Demanderesse indique que les polymères mis en oeuvre pour les essais n° 5 et 6 ne permettent pas de réaliser la série de mesure de viscosités, telle qu'indiquée au début de cet exemple. En effet, lorsque la contrainte de cisaillement atteint 200 Pascals, la formulation correspondante est expulsée hors du module de mesure plan / plan, car ladite formulation est beaucoup trop fluide. D'un point de vue pratique, ce comportement se traduit au niveau industriel par l'expulsion de la formulation hors du moule lorsqu'on réalise l'étape de vibrocompaction. Aussi, les polymères correspondant à ces essais ne satisfont pas l'homme du métier.

Pour les autres essais, l'examen de la figure 1 démontre que :
- lorsque la contrainte de cisaillement est faible (par analogie aux étapes 2) de repos après mélange et 5) de démoulage), c'est l'essai n° 5 correspondant au polymère selon l'invention qui conduit à la viscosité la plus élevée : ce facteur est très favorable à l'obtention d'une pièce parfaitement cohésive, à la sortie du moule;
- lorsque la contrainte de cisaillement augmente, la viscosité chute de manière très brutale pour les polymères correspondant aux essais n° 1, 2 et 5, à la différence des polymères mis en oeuvre dans les essais n° 3 et 4 : cette propriété est très favorable pour l'étape 3) d'introduction de la formulation au sein du moule et l'étape 4) de vibrocompaction, où ladite formulation doit accéder le plus rapidement possible à un état de grande fluidité, en vue de bien remplir le moule, et de le remplir de manière uniforme ;
- lorsque la contrainte diminue à nouveau, la viscosité augmente pour tous les essais, mais seul l'essai n° 5 conduit à la viscosité la plus élevée : c'est un élément en faveur d'une pièce parfaitement cohésive, lorsque celle-ci est sortie du moule selon l'étape 5) du procédé ;
- de manière générale, c'est l'essai n° 5 qui conduit au rapport le plus élevé entre les valeurs de viscosité à haut et à bas cisaillement (environ égal à 5 décades, alors qu'il n'est qu'au mieux égal à environ 4 décades pour le polymère de l'art antérieur correspondant à l'essai n° 3) ; ceci souligne le comportement rhéologique, particulièrement intéressant pour une application en vibrocompaction, apporté par le polymère selon l'invention : il confère aux formulations dans lesquelles il est incorporé deux profils rhéologiques très distincts en fonction de l'état de cisaillement auquel ces formulations sont soumises.

Par conséquent, seul le polymère selon l'invention et correspondant à l'essai n° 5, permet de résoudre le problème technique complexe objet de la présente Demande.

### Exemple 2

Cet exemple illustre la mise en oeuvre industrielle d'un polymère selon l'invention, dans un procédé de fabrication d'une formulation qui est un bloc de béton obtenu par la technique de vibrocompaction. Cet exemple illustre aussi la formulation selon l'invention ainsi obtenue.

Pour la production de blocs de béton (parpaings, pavés...), on introduit dans un malaxeur :
- 75 litres d'eau,
- 143 kg de ciment,
- 200 kg de sable,
- 1000 kg de gravier,
- 420 grammes d'un polymère selon l'invention qui est un copolymère non réticulé, et constitué, exprimé en pourcentage en poids de chacun des constituants :

### Pour l'essai n° 8 :

a) de 38,1 % d'acide méthacrylique,
b) de 54,2 % d'acrylate d'éthyle,
c) de 7,7 % d'un monomère de formule R₁-(R₂O)ₘ-R₃, où :
   - R₁ représente le groupe méthacrylate,,
   - R₂O désigne un groupe d'oxyde d'éthylène,
   - m est égal à 25,
   - R₃ désigne une chaîne alkyle ramifiée ayant 32 atomes de carbone dont la synthèse a été décrite précédemment.

### Pour l'essai n° 9 :

a) de 37,0% d'acide méthacrylique,
b) de 55,0 % d'acrylate d'éthyle,
c) de 8,0 % d'un monomère de formule R₁-(R₂O)ₘ-R₃, où :
   - R₁ représente le groupe résultat de la condensation entre le méthacrylate d'éthylène glycol et le toluène diisocyanate,
   - R₂O désigne un groupe d'oxyde d'éthylène,
   - m est égal à 25,
   - R₃ désigne le groupement tristyryl phényl (30 atomes de carbone)
le monomère de formule R₁-(R₂O)ₘ-R₃ ayant été obtenu à partir du protocole b), et le copolymère ayant été obtenu à partir du protocole B), dans lequel l'homme du métier a calculé les masses de différents constituants en fonction des ratio monomériques recherchés.

### Pour l'essai n° 10 :

a) de 39,0 % d'acide méthacrylique,
b) de 54,0 % d'acrylate d'éthyle,
c) de 7,0 % d'un monomère de formule R₁-(R₂O)ₘ-R₃, où :
   - R₁ représente le groupe hémimaléate,
   - R₂O désigne un groupe d'oxyde d'éthylène,
   - m est égal à 25,
   - R₃ désigne le radical alkyle ayant 32 atomes de carbone
le monomère de formule R₁-(R₂O)ₘ-R₃ ayant été obtenu à partir du protocole c), et le copolymère ayant été obtenu à partir du protocole A), dans lequel l'homme du métier a calculé les masses de différents constituants en fonction des ratio monomériques recherchés.

Le mélange ainsi obtenu est transféré dans une trémie puis déposé sur un plateau horizontal vibrant. A l'aide d'un tiroir, le béton est uniformément étalé, sous vibration, dans le moule. Dans l'étape suivante, le contenu de ce dernier est compacté sous forte vibration afin d'obtenir la forme souhaitée. Finalement, la pièce en béton est démoulée. Après démoulage, on observe pour chacun des essais n° 8 à 10 :
- que la pièce ne possède aucun défaut de surface, et que sa forme correspond bien à celle du moule,
- qu'il ne subsiste dans le moule aucun résidu de formulation collé sur les parois.

De plus, la résistance mécanique de la pièce ainsi obtenue, et mesurée selon la norme NF EN 771-3 est alors égale à (en MPa) 10,1 - 10,0 - 9,9 respectivement pour les essais n° 8, 9 et 10.

On a cherché à fabriquer selon la méthode précédemment décrite, une pièce à partir de la même formulation que celle précédemment indiquée, mais sans le polymère selon l'invention : ceci s'avère impossible sans réduire la quantité d'eau, qui doit alors être égale à 66 litres. La résistance mécanique obtenue et mesurée selon la norme NF EN 771-3 est alors égale à 9,1 Mpa. Ceci démontre donc bien que les polymères selon l'invention permettent également d'augmenter la résistance mécanique des pièces fabriquées par vibrocompaction, selon la méthode décrite dans la présente invention.

### Exemple 3

Cet exemple illustre la mise en oeuvre industrielle d'un polymère selon l'invention, dans un procédé de fabrication d'une formulation qui est un bloc de béton obtenu par la technique de vibrocompaction. Cet exemple illustre aussi la formulation selon l'invention ainsi obtenue.

Pour chacun des essais n° 11 à 16, on réalise des blocs de béton par introduction dans un malaxeur d'un certain nombre de constituants, tel qu'indiqué dans le tableau 1.

**Tableau 1**

| Constituants | Formules pour 1 m³ de béton | | | | | |
|---|---|---|---|---|---|---|
| | 11 | 12 | 13 | 14 | 15 | 16 |
| Ciment CEM I 42.5 R "Oźarów" | 340 | 340 | 340 | 290 | 272 | 255 |
| Graviers "Truskawica" (2 - 8 mm) | 1046 | - | 512 | 512 | 512 | 507 |
| Graviers "ZKSM" (2 - 8 mm) | - | 1023 | 518 | 512 | 512 | 512 |
| Sable "Lyszkowice" (0 - 2 mm) | 958 | 960 | 960 | 960 | 950 | 960 |
| Argile Betocarb™ MP | - | - | - | 55 | - | 85 |
| Cendres volantes "Kozienice" | - | - | - | - | 68. | - |
| Polymère selon l'essai n° | 8 | 9 | 10 | 8 | 9 | 10 |
| % (poids sec) de polymère mis en oeuvre / poids sec de ciment | 0.34 | 1.0 | 1.0 | 1.0 | 1.0 | 1.0 |
| Eau ajoutée (pour : rapport eau/ciment = 0,36) | 122 | 122 | 122 | 122 | 122 | 122 |
| Masse totale des constituants pour 1 m³ de béton | 2466 | 2446 | 2452 | 2452 | 2437 | 2442 |

Le mélange ainsi obtenu est transféré dans une trémie puis déposé sur un plateau horizontal vibrant. A l'aide d'un tiroir, le béton est uniformément étalé, sous vibration, dans le moule. Dans l'étape suivante, le contenu de ce dernier est compacté sous forte vibration afin d'obtenir la forme souhaitée. Finalement, la pièce en béton est démoulée. On observe alors, pour chacun des essais n° 11 à 16 illustrant l'invention que la pièce ne possède aucun défaut de surface, et que sa forme correspond bien à celle du moule, et qu'il ne subsiste dans le moule aucun résidu de formulation collé sur les parois.

## Revendications

1. Utilisation d'un additif rhéologique, dans un procédé de fabrication par vibrocompaction d'une formulation contenant de l'eau et au moins un liant hydraulique, **caractérisée en ce que** ledit additif est une émulsion d'au moins un copolymère non réticulé et constitué :
a) d'acide (méth)acrylique,
b) de (méth)acrylate d'alkyle ayant de 1 à 25 atomes de carbone, préférentiellement de 1 à 4 atomes de carbone, ce méthacrylate d'alkyle étant préférentiellement le (méth)acrylate d'étlryle,
c) d'un monomère de formule R₁-(R₂O)ₘ-R₃, où :
- R₁ désigne un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, *α*-*α'* diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
- R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
- m est un entier compris entre 20 et 30, préférentiellement entre 23 et 27, et est très préférentiellement égal à 25,
- R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

2. Utilisation selon la revendication 1, **caractérisée en ce que** ledit copolymère est
constitué, exprimé en pourcentage en poids de chacun des constituants (le total a + b + c étant égal à 100 %), de :
a) 25 % à 60 %, préférentiellement 30 % à 50 % d'acide (méth)acrylique,
b) 40 % à 75 %, préférentiellement 50 % à 70 % de (méth)acrylate d'alkyle ayant de 1 à 25 atomes de carbone, préférentiellement de 1 à 4 atomes de carbone, ce méthacrylate d'alkyle étant préférentiellement le (méth)acrylate d'éthyle,
c) 1 % à 20 %, préférentiellement 5 % à 15 % d'un monomère de formule R₁-(R₂O)ₘ-R₃, où:
- R₁ désigne un radical contenant une fonction insaturée polymérisable, appartenant au groupe des vinyliques ainsi qu'au groupe des esters acryliques, méthacrylique, maléique, ainsi qu'au groupe des insaturés uréthannes tels que les acryluréthanne, méthacryluréthanne, *α-α'* dixnéthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
- R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
- m est un entier compris entre 20 et 30, préférentiellement entre 23 et 27, et est très préférentiellement égal à 25,
- R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

3. Utilisation selon l'une des revendications 1 ou 2, **caractérisée en ce que** ledit copolymère est totalement ou partiellement neutralisé par au moins un agent de neutralisation, choisi parmi les hydroxydes et / ou oxydes de calcium, de magnésium, de lithium, de baryum, les hydroxydes de sodium, de potassium, ou l'ammoniaque, les amines primaires, secondaires, ou tertiaires, et leurs mélanges.

4. Utilisation selon l'une des revendications 1 à 3, d'un additif rhéologique dans un procédé de fabrication par vibrocompaction d'une formulation contenant de l'eau et au moins un liant hydraulique, aussi **caractérisée en ce que** le rapport eau / liant hydraulique (E/L) est strictement supérieur à 0,25, préférentiellement 0,30, très préférentiellement 0,35.

5. Utilisation selon l'une des revendications 1 à 4, d'un additif rhéologique dans un procédé de fabrication par vibrocompaction d'une formulation contenant de l'eau et au moins un liant hydraulique, **caractérisée en ce que** ladite formulation contient de 0,05 % à 3 %, préférentiellement de 0,1 % à 2 %, très préférentiellement de 0,1 % à 1,5 % en poids sec dudit additif rhéologique par rapport au poids sec de liant hydraulique.

6. Utilisation selon l'une des revendications 1 à 5, d'un additif rhéologique dans un procédé de fabrication par vibrocompaction d'une formulation contenant de l'eau et au moins un liant hydraulique, **caractérisée en ce que** ladite formulation contient aussi des granulats.

7. Utilisation selon l'une des revendications 1 à 6, d'un additif rhéologique dans un procédé de fabrication par vibrocompaction d'une formulation contenant de l'eau et au moins un liant hydraulique, **caractérisée en ce que** ladite formulation contient aussi un autre additif choisi parmi un plastifiant, un superplastifiant, un dispersant, un antimousse ou leurs mélanges.

8. Utilisation selon l'une des revendications 1 à 7, d'un additif rhéologique dans un procédé de fabrication par vibrocompaction d'une formulation contenant de l'eau et au moins un liant hydraulique, **caractérisée en ce que** ledit procédé comporté
1) une étape de fabrication d'une formulation contenant au moins un liant hydraulique, de l'eau, éventuellement des granulats et éventuellement d'autres additifs choisis parmi un plastifiant, un superplastifiant, un dispersant, un antimousse ou leurs mélanges, par mélange de ces différents constituants,
2) une étape de repos de la formulation après mélange,
3) une étape d'introduction dans un moule de ladite formulation,
4) une étape qui est la combinaison d'une action de compression et d'une action de vibration exercées sur le moule,
5) une étape de sortie du moule de la pièce obtenue à l'issue de l'étape 4).

9. Utilisation selon l'une des revendications 1 à 8, d'un additif rhéologique dans un procédé de fabrication par vibrocompaction d'une formulation contenant de l'eau et au moins un liant hydraulique, **caractérisée en ce que** ledit liant hydraulique est choisi parmi la chaux, le ciment, le plâtre, les cendres volantes, les déchets sidérurgiques, les silicates solubles, les argiles, les zéolithes et leurs mélanges.

10. Formulation contenant de l'eau et au moins un liant hydraulique, ainsi qu'un additif rhéologique **caractérisé en ce qu'**il est une émulsion d'au moins un copolymère non réticulé constitué :
a) d'acide (méth)acrylique,
b) de (méth)acrylate d'alkyle ayant de 1 à 25 atomes de carbone, préférentiellement de 1 à 4 atomes de carbone, ce méthacrylate d'alkyle étant préférentiellement Le (méth)acrylate d'éthyle,
c) d'un monomère de formule R₁-(R₂O)ₘ-R₃, où :
- R₁ désigne un radical contenant une fonction insaturée polymérisable, appartenant au groupe des vinyliques ainsi qu'au groupe des esters acrylique, méthacrylique, maléique, ainsi qu'au groupe des insaturés uréthannes tels que les acryluréthanne, méthacryluréthanne, *α-α'* diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
- R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
- m est un entier compris entre 20 et 30, préférentiellement entre 23 et 27, et est très préférentiellement égal à 25,
- R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

11. Formulation selon la revendication 12, **caractérisée en ce que** ledit copolymère non réticulé est constitué, exprimé en pourcentage en poids de chacun des constituants (le total a + b + ç étant égal à 100 %) de :
a) 25 % à 60 %, préférentiellement 30 % à 50 % d'acide (méth)acrylique,
b) 40 % à 75 %, préférentiellement 50 % à 70 % de (méth)acrylate d'alkyle ayant de 1 à 25 atomes de carbone, préférentiellement de 1 à 4 atomes de carbone, ce méthacrylate d'alkyle étant préférentiellement le (méth)acrylate d'éthyle,
c) 1 % à 20 %, préférentiellement 5% à 15% d'un monomère de formule R₁-(R₂O)ₘ-R₃, où :
- R₁ désigne un radical contenant une fonction insaturée polymérisable,
appartenant au groupe des vinyliques ainsi qu'au groupe des esters acrylique, méthacrylique, maléique, ainsi qu'au groupe des insaturées uréthannes tels que les acryluréthanne, méthacryluréthanne, *α-α'* diméthyl-isopropényl-benzyluréthanne, allyluréthanne, de même qu'au groupe des éthers allyliques ou vinyliques substitués ou non, ou encore au groupe des amides ou des imides éthyléniquement insaturées, ou encore au groupe constitué par l'acrylamide et le méthacrylamide, et préférentiellement méthacrylique,
- R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
- m est un entier compris entre 20 et 30, préférentiellement entre 23 et 27, et est très préférentiellement égal à 25,
- R₃ désigne une chaîne alkyle linéaire ou ramifiée ayant de 28 à 33 atomes de carbone, préférentiellement de 30 à 33 atomes de carbone, et ayant très préférentiellement 32 atomes de carbone.

12. Formulation selon l'une des revendications 10 ou 11, **caractérisée en ce que** ledit copolymère non réticulé est totalement ou partiellement neutralisé par au moins un agent de neutralisation, choisi parmi les hydroxydes et / ou oxydes de calcium, de magnésium, de lithium, de baryum, les hydroxydes de sodium, de potassium, ou l'ammoniaque, les amines primaires, secondaires, ou tertiaires, et leurs mélanges.

13. Formulation selon l'une des revendications 10 à 12, contenant de l'eau et au moins un liant hydraulique, ainsi qu'un additif rhéologique, **caractérisée en ce que** le rapport eau / liant hydraulique (E/L) est strictement supérieur à 0,25, préférentiellement 0,30, très préférentiellement 0,35.

14. Formulation selon l'une des revendications 10 à 13, contenant de l'eau et au moins un liant hydraulique, ainsi qu'un additif rhéologique, **caractérisée en ce qu'**elle contient de 0,05 % à 3 %, préférentiellement de 0,1 % à 2 %, très préférentiellement de 0,1 % à 1,5 % en poids sec dudit additif rhéologique par rapport au poids sec de liant hydraulique.

15. Formulation selon l'une des revendications 10 à 14, contenant de l'eau et au moins un liant hydraulique, ainsi qu'un additif rhéologique, **caractérisée en ce qu'**elle contient aussi des granulats.

16. Formulation selon l'une des revendications 10 à 15, contenant de l'eau et au moins un liant hydraulique, ainsi qu'un additif rhéologique, **caractérisée en ce qu'**elle contient aussi un autre additif choisi parmi un plastifiant, un superplastifiant, un dispersant, un antimousse ou leurs mélanges.

17. Formulation selon l'une des revendications 10 à 16, contenant de l'eau et au moins un liant hydraulique, ainsi qu'un additif rhéologique, **caractérisée en ce qu'**elle est obtenue par un procédé de vibrocompaction comportant :
1) une étape de fabrication d'une formulation contenant au moins un liant hydraulique, de l'eau, éventuellement des granulats et éventuellement d'autres additifs choisis parmi un plastifiant, un superplastifiant, un dispersant, un antimousse ou leurs mélanges, par mélange de ces différents constituants,
2) une étape de repos de la formulation après mélange,
3) une étape d'introduction dans un moule de ladite formulation,
4) une étape qui est la combinaison d'une action de compression et d'une action de vibration exercées sur le moule,
5) une étape de sortie du moule de la pièce obtenue à l'issue de l'étape 4).

18. Formulation selon l'une des revendications 10 à 17, contenant de l'eau et au moins un liant hydraulique, ainsi qu'un additif rhéologique, **caractérisée en ce que** ledit liant hydraulique est choisi parmi la chaux, le ciment, le plâtre, les cendres volantes; les déchets sidérurgiques, les silicates solubles, les argiles, les zéolithes et leurs mélanges.

## Patentansprüche

1. Verwendung eines Rheologieadditivs bei einem Verfahren zur Herstellung einer Wasser und mindestens ein hydraulisches Bindemittel enthaltenden Formulierung durch Schwingverdichtung, **dadurch gekennzeichnet, dass** es sich bei dem Additiv um eine Emulsion mindestens eines unvernetzten Copolymers aus:
a) (Meth)acrylsäure,
b) Alkyl(meth)aclylat mit 1 bis 25 Kohlenstoffatomen, vorzugweise 1 bis 4 Kohlenstoffatomen, wobei es sich bei diesem Alkylmethacrylat vorzugsweise um Ethyl(meth)acrylat handelt,
c) einem Monomer der Formel R₁-(R₂O)ₘ-R₃, wobei:
- R₁ für einen Rest mit einer polymerisierbaren ungesättigten Funktion aus der Gruppe der Vinylverbindungen sowie der Gruppe der Acrylsäure-, Methacrylsäure- und Maleinsäureester sowie der Gruppe der ungesättigten Urethane wie Acrylurethan, Methacrylurethan, α,α'-Dimethyl-isopropenyl-Benzylurethan und Allylurethan sowie der Gruppe der substituierten oder unsubstituierten Allyl- oder Vinylether oder auch der Gruppe der ethylenisch ungesättigten Amide oder Imide oder auch der Gruppe bestehend aus Acrylamid und Methacrylamid und vorzugsweise einen Methacrylrest steht,
- R₂O für eine Alkylenoxidgruppe mit 1 bis 6 Kohlenstoffatomen, vorzugsweise eine Ethylenoxid- und Propylenoxidgruppe, ganz besonders bevorzugt eine Ethylenoxidgruppe, steht,
- m für eine ganze Zahl zwischen 20 und 30, vorzugsweise zwischen 23 und 27 und ganz besonders bevorzugt gleich 25 steht,
- R₃ für eine lineare oder verzweigte Alkylkette mit 28 bis 33 Kohlenstoffatomen, vorzugsweise 30 bis 33 Kohlenstoffatomen und ganz besonders bevorzugt 32 Kohlenstoffatomen steht handelt.

2. Verwendung nach Anspruch 1, **dadurch gekennzeichnet, dass** das Copolymer, ausgedrückt als Gewichtsprozentanteil jedes der Bestandteile, aus Folgendem besteht (wobei die Summe von a + b + c gleich 100% ist):
a) 25% bis 60%, vorzugsweise 30% bis 50%, (Meth)acrylsäure,
b) 40% bis 75%, vorzugsweise 50% bis 70%, Alkyl(meth)acrylat mit 1 bis 25 Kohlenstoffatomen, vorzugsweise 1 bis 4 Kohlenstoffatomen, wobei es sich bei diesem Alkylmethacrylat vorzugsweise um Ethyl(meth)acrylat handelt,
c) 1% bis 20%, vorzugsweise 5% bis 15%, eines Monomers der Formel R₁-(R₂O)ₘ-R₃, wobei:
- R₁ für einen Rest mit einer polymerisierbaren ungesättigten Funktion aus der Gruppe der Vinylverbindungen sowie der Gruppe der Acrylsäure-, Methacrylsäure- und Maleinsäureester sowie der Gruppe der ungesättigten Urethane wie Acrylurethan, Methacrylurethan, α,α'-Dimethyl-Isopropenyl-Benzylurethan und Allylurethan sowie der Gruppe der substituierten oder unsubstituierten Allyl- oder Vinylether oder auch der Gruppe der ethylenisch ungesättigten Amide oder Imide oder auch der Gruppe bestehend aus Acrylamid und Methacrylamid und vorzugsweise einen Methacrylrest steht,
- R₂O für eine Alkylenoxidgruppe mit 1 bis 6 Kohlenstoffatomen, vorzugsweise eine Ethylenoxid- und Propylenoxidgruppe, ganz besonders bevorzugt eine Ethylenoxidgruppe, steht,
- m für eine ganze Zahl zwischen 20 und 30, vorzugsweise zwischen 23 und 27 und ganz besonders bevorzugt gleich 25 steht,
- R₃ für eine lineare oder verzweigte Alkylkette mit 28 bis 33 Kohlenstoffatomen, vorzugsweise 30 bis 33 Kohlenstoffatomen und ganz besonders bevorzugt 32 Kohlenstoffatomen steht.

3. Verwendung nach Anspruch 1 oder 2, **dadurch gekennzeichnet, dass** das Copolymer teilweise oder vollständig mit mindestens einem Neutralisationsmittel, das aus Hydroxiden und/oder Oxiden von Calcium, Magnesium, Lithium, Barium, den Hydroxiden von Natrium und Kalium, wässrigem Ammoniak, primären, sekundären oder tertiären Aminen und Mischungen davon ausgewählt ist, neutralisiert ist.

4. Verwendung eines Rheologieadditivs bei einem Verfahren zur Herstellung einer Wasser und mindestens ein hydraulisches Bindemittel enthaltenden Formulierung durch Schwingverdichtung nach einem der Ansprüche 1 bis 3, außerdem **dadurch gekennzeichnet, dass** das Verhältnis von Wasser zu hydraulischem Bindemittel (W/B) streng größer als 0,25, vorzugsweise 0,30, ganz besonders bevorzugt 0,35, ist.

5. Verwendung eines Rheologieadditivs bei einem Verfahren zur Herstellung einer Wasser und mindestens ein hydraulisches Bindemittel enthaltenden Formulierung durch Schwingverdichtung nach einem der Ansprüche 1 bis 4, **dadurch gekennzeichnet, dass** die Formulierung 0,05 Trockengew.-% bis 3 Trockengew.-%, vorzugsweise 0,1 Trockengew.-% bis 2 Trockengew.-%, ganz besonders bevorzugt 0,1 Trockengew.-% bis 1,5 Trockengew.-% des Rheologieadditivs, bezogen auf das Trockengewicht des hydraulischen Bindemittels, enthält.

6. Verwendung eines Rheologieadditivs bei einem Verfahren zur Herstellung einer Wasser und mindestens ein hydraulisches Bindemittel enthaltenden Formulierung durch Schwingverdichtung nach einem der Ansprüche 1 bis 5, **dadurch gekennzeichnet, dass** die Formulierung außerdem Zuschlagstoffe enthält.

7. Verwendung eines Rheologieadditivs bei einem Verfahren zur Herstellung einer Wasser und mindestens ein hydraulisches Bindemittel enthaltenden Formulierung durch Schwingverdichtung nach einem der Ansprüche 1 bis 6, **dadurch gekennzeichnet, dass** die Formulierung außerdem ein weiteres Additiv, das aus einem Verflüssiger, einem Superverflüssiger, einem Dispergiermittel, einem Antischaummittel oder Mischungen davon ausgewählt ist, enthält.

8. Verwendung eines Rheologieadditivs bei einem Verfahren zur Herstellung einer Wasser und mindestens ein hydraulisches Bindemittel enthaltenden Formulierung durch Schwingverdichtung nach einem der Ansprüche 1 bis 7, **dadurch gekennzeichnet, dass** das Verfahren Folgendes umfasst:
1) einen Schritt der Herstellung einer mindestens ein hydraulisches Bindemittel, Wasser, gegebenenfalls Zuschlagstoffe und gegebenenfalls weitere Additive, die aus einem Verflüssiger, einem Superverflüssiger, einem Dispergiermittel, einem Antischaummittel oder Mischungen davon ausgewählt sind, enthaltenden Formulierung durch Mischen dieser verschiedenen Bestandteile,
2) einen Schritt des Ruhenlassens der Formulierung nach dem Mischen,
3) einen Schritt des Eintragens der Formulierung in eine Form,
4) einen Schritt, bei dem es sich um die Kombination einer Komprimierungseinwirkung und einer Schwingungseinwirkung auf die Form handelt,
5) einen Schritt des Entfernens des am Ende von Schritt 4) erhaltenen Teils aus der Form.

9. Verwendung eines Rheologieadditivs bei einem Verfahren zur Herstellung einer Wasser und mindestens ein hydraulisches Bindemittel enthaltenden Formulierung durch Schwingverdichtung nach einem der Ansprüche 1 bis 8, **dadurch gekennzeichnet, dass** das hydraulische Bindemittel aus Kalk, Zement, Gips, Flugaschen, Abfällen aus der Eisen- und Stahlindustrie, löslichen Silicaten, Tonen, Zeolithen und Mischungen davon ausgewählt ist.

10. Formulierung, enthaltend Wasser und mindestens ein hydraulisches Bindemittel sowie ein Rheologieadditiv, **dadurch gekennzeichnet, dass** es sich dabei um eine Emulsion mindestens eines unvernetzten Copolymers aus:
a) (Meth)acrylsäure,
b) Alkyl(meth)acrylat mit 1 bis 25 Kohlenstoffatomen, vorzugweise 1 bis 4 Kohlenstoffatomen, wobei es sich bei diesem Alkylmethacrylat vorzugsweise um Ethyl(meth)acrylat handelt,
c) einem Monomer der Formel R₁-(R₂O)ₘ-R₃, wobei:
- R₁ für einen Rest mit einer polymerisierbaren ungesättigten Funktion aus der Gruppe der Vinylverbindungen sowie der Gruppe der Acrylsäure-, Methacrylsäure- und Maleinsäureester sowie der Gruppe der ungesättigten Urethane wie Acrylurethan, Methacrylurethan, α,α'-Dimethyl-isopropenyl-benzylurethan und Allylurethan sowie der Gruppe der substituierten oder unsubstituierten Allyl- oder Vinylether oder auch der Gruppe der ethylenisch ungesättigten Amide oder Imide oder auch der Gruppe bestehend aus Acrylamid und Methacrylamid und vorzugsweise einen Methacrylrest steht,
- R₂O für eine Alkylenoxidgruppe mit 1 bis 6 Kohlenstoffatomen, vorzugsweise eine Ethylenoxid- und Propylenoxidgruppe, ganz besonders bevorzugt eine Ethylenoxidgruppe, steht,
- m für eine ganze Zahl zwischen 20 und 30, vorzugsweise zwischen 23 und 27 und ganz besonders bevorzugt gleich 25 steht,
- R₃ für eine lineare oder verzweigte Alkylkette mit 28 bis 33 Kohlenstoffatomen, vorzugsweise 30 bis 33 Kohlenstoffatomen und ganz besonders bevorzugt 32 Kohlenstoffatomen steht handelt.

11. Formulierung nach Anspruch 12, **dadurch gekennzeichnet, dass** das unvernetzte Copolymer, ausgedrückt als Gewichtsprozentanteil jedes der Bestandteile, aus Folgendem besteht (wobei die Summe von a + b + c gleich 100% ist):
a) 25% bis 60%, vorzugsweise 30% bis 50%, (Meth)acrylsäure,
b) 40% bis 75%, vorzugsweise 50% bis 70%, Alkyl(meth)acrylat mit 1 bis 25 Kohlenstoffatomen, vorzugweise 1 bis 4 Kohlenstoffatomen, wobei es sich bei diesem Alkylmethacrylat vorzugsweise um Ethyl(meth)acrylat handelt,
c) 1% bis 20%, vorzugsweise 5% bis 15%, eines Monomers der Formel R₁-(R₂O)ₘ-R₃, wobei:
- R₁ für einen Rest mit einer polymerisierbaren ungesättigten Funktion aus der Gruppe der Vinylverbindungen sowie der Gruppe der Acrylsäure-, Methacrylsäure- und Maleinsäureester sowie der Gruppe der ungesättigten Urethane wie Acrylurethan, Methacrylurethan, α,α'-Dimethyl-isopropenyl-benzylurethan und Allylurethan sowie der Gruppe der substituierten oder unsubstituierten Allyl- oder Vinylether oder auch der Gruppe der ethylenisch ungesättigten Amide oder Imide oder auch der Gruppe bestehend aus Acrylamid und Methacrylamid und vorzugsweise einen Methacrylrest steht,
- R₂O für eine Alkylenoxidgruppe mit 1 bis 6 Kohlenstoffatomen, vorzugsweise eine Ethylenoxid- und Propylenoxidgruppe, ganz besonders bevorzugt eine Ethylenoxidgruppe, steht,
- m für eine ganze Zahl zwischen 20 und 30, vorzugsweise zwischen 23 und 27 und ganz besonders bevorzugt gleich 25 steht,
- R₃ für eine lineare oder verzweigte Alkylkette mit 28 bis 33 Kohlenstoffatomen, vorzugsweise 30 bis 33 Kohlenstoffatomen und ganz besonders bevorzugt 32 Kohlenstoffatomen steht.

12. Formulierung nach Anspruch 10 oder 11, **dadurch gekennzeichnet, dass** das unvernetzte Copolymer teilweise oder vollständig mit mindestens einem Neutralisationsmittel, das aus Hydroxiden und/oder Oxiden von Calcium, Magnesium, Lithium, Barium, den Hydroxiden von Natrium und Kalium, wässrigem Ammoniak, primären, sekundären oder tertiären Aminen und Mischungen davon ausgewählt ist, neutralisiert ist.

13. Formulierung nach einem der Ansprüche 10 bis 12, enthaltend Wasser und mindestens ein hydraulisches Bindemittel sowie ein Rheologieadditiv, **dadurch gekennzeichnet, dass** das Verhältnis von Wasser zu hydraulischem Bindemittel (W/B) streng größer als 0,25, vorzugsweise 0,30, ganz besonders bevorzugt 0,35, ist.

14. Formulierung nach einem der Ansprüche 10 bis 13, enthaltend Wasser und mindestens ein hydraulisches Bindemittel sowie ein Rheologieadditiv, **dadurch gekennzeichnet, dass** sie 0,05 Trockengew.-% bis 3 Trockengew.-%, vorzugsweise 0,1 Trockengew.-% bis 2 Trockengew.-%, ganz besonders bevorzugt 0,1 Trockengew.-% bis 1,5 Trockengew.-% des Rheologieadditivs, bezogen auf das Trockengewicht des hydraulischen Bindemittels, enthält.

15. Formulierung nach einem der Ansprüche 10 bis 14, enthaltend Wasser und mindestens ein hydraulisches Bindemittel sowie ein Rheologieadditiv, **dadurch gekennzeichnet, dass** sie außerdem Zuschlagstoffe enthält.

16. Formulierung nach einem der Ansprüche 10 bis 15, enthaltend Wasser und mindestens ein hydraulisches Bindemittel sowie ein Rheologieadditiv, **dadurch gekennzeichnet, dass** sie außerdem ein weiteres Additiv, das aus einem Verflüssiger, einem Supemerflüssiger, einem Dispergiermittel, einem Antischaummittel oder Mischungen davon ausgewählt ist, enthält.

17. Formulierung nach einem der Ansprüche 10 bis 16, enthaltend Wasser und mindestens ein hydraulisches Bindemittel sowie ein Rheologieadditiv, **dadurch gekennzeichnet, dass** sie durch ein Schwingverdichtungsverfahren erhalten wird, das Folgendes umfasst:
1) einen Schritt der Herstellung einer mindestens ein hydraulisches Bindemittel, Wasser, gegebenenfalls Zuschlagstoffe und gegebenenfalls weitere Additive, die aus einem Verflüssiger, einem Superverflüssiger, einem Dispergiermittel, einem Antischaummittel oder Mischungen davon ausgewählt sind, enthaltenden Formulierung durch Mischen dieser verschiedenen Bestandteile,
2) einen Schritt des Ruhenlassens der Formulierung nach dem Mischen,
3) einen Schritt des Eintragens der Formulierung in eine Form,
4) einen Schritt, bei dem es sich um die Kombination einer Komprimierungseinwirkung und einer Schwingungseinwirkung auf die Form handelt,
5) einen Schritt des Entfernens des am Ende von Schritt 4) erhaltenen Teils aus der Form.

18. Formulierung nach einem der Ansprüche 10 bis 17, enthaltend Wasser und mindestens ein hydraulisches Bindemittel sowie ein Rheologieadditiv, **dadurch gekennzeichnet, dass** das hydraulische Bindemittel aus Kalk, Zement, Gips, Flugaschen, Abfällen aus der Eisen- und Stahlindustrie, löslichen Silicaten, Tonen, Zeolithen und Mischungen davon ausgewählt ist.

## Claims

1. Use of a rheological additive, in a process of manufacture by vibro-compaction of a formulation containing water and at least one hydraulic binder, **characterized in that** the said additive is an emulsion of at least one non-cross-linked copolymer, consisting of:
a) (meth)acrylic acid,
b) alkyl (meth)acrylate having 1 to 25 carbon atoms, preferentially 1 to 4 carbon atoms, in which this alkyl methacrylate is preferentially ethyl (meth)acrylate,
c) a monomer of formula R₁-(R₂O)ₘ-R₃, in which:
- R₁ designates a radical containing an unsaturated polymerizable function, belonging to the group of vinylics, as well as to the group of acrylic, methacrylic, maleic esters, as well as to the group of unsaturated urethanes such as acrylurethane, methacrylurethane, α-α' dimethyl-isopropenyl-benzylurethane, allylurethane, as well as to the group of allylic or vinylic ethers, whether or not substituted, or again to the group of ethylenically unsaturated amides or imides, or again to the group constituted by acrylamide and methacrylamide, and preferentially methacrylic,
- R₂O designates an alkylene oxide group having 1 to 6 carbon atoms, preferentially an ethylene oxide and propylene oxide group, very preferentially an ethylene oxide group,
- m is an integer comprised between 20 and 30, preferentially between 23 and 27, and is very preferentially equal to 25,
- R₃ designates a linear or branched alkyl chain having 28 to 33 carbon atoms, preferentially 30 to 33 carbon atoms, and having very preferentially 32 carbon atoms.

2. Use according to claim 1, **characterized in that** the said copolymer consists, expressed as a percentage by weight of each of the constituents (the total a + b + c is equal to 100%) of:
a) 25% to 60%, preferentially 30% to 50% of (meth)acrylic acid,
b) 40% to 75%, preferentially 50% to 70% of alkyl (meth)acrylate having 1 to 25 carbon atoms, preferentially 1 to 4 carbon atoms, where this alkyl methacrylate is preferentially ethyl (meth)acrylate,
c) 1% to 20%, preferentially 5% to 15% of a monomer of formula R₁ - (R₂O)ₘ - R₃, in which:
- R₁ designates a radical containing an unsaturated polymerizable function, belonging to the group of vinylics, as well as to the group of acrylic, methacrylic, maleic esters, as well as to the group of unsaturated urethanes such as acrylurethane, methacrylurethane, α-α' dimethyl-isopropenyl-benzylurethane, allylurethane, as well as to the group of allylic or vinylic ethers, whether or not substituted, or again to the group of ethylenically unsaturated amides or imides, or again to the group constituted by acrylamide and methacrylamide, and preferentially methacrylic,
- R₂O designates an alkylene oxide group having 1 to 6 carbon atoms, preferentially an ethylene oxide and propylene oxide group, very preferentially an ethylene oxide group,
- m is an integer comprised between 20 and 30, preferentially between 23 and 27, and is very preferentially equal to 25,
- R₃ designates a linear or branched alkyl chain having 28 to 33 carbon atoms, preferentially 30 to 33 carbon atoms, and having very preferentially 32 carbon atoms.

3. Use according to one of claims 1 or 2, **characterized in that** the said copolymer is totally or partially neutralized by at least one neutralization agent, chosen from among the hydroxides and/or oxides of calcium, magnesium, lithium, barium, the hydroxides of sodium, potassium, or ammonium hydroxide, the primary, secondary or tertiary amines, and their blends.

4. Use according to one of claims 1 to 3, of a rheological additive, in a process of manufacture by vibro-compaction of a formulation containing water and at least one hydraulic binder, also **characterized in that** the water/hydraulic binder (W/B) ratio is strictly higher than 0.25, preferentially 0.30, very preferentially 0.35.

5. Use according to one of claims 1 to 4, of a rheological additive, in a process of manufacture by vibro-compaction of a formulation containing water and at least one hydraulic binder, **characterized in that** the said formulation contains 0.05% to 3%, preferentially 0.1% to 2%, very preferentially 0.1% to 1.5% by dry weight of the said rheological additive, relative to the dry weight of hydraulic binder.

6. Use according to one of claims 1 to 5, of a rheological additive, in a process of manufacture by vibro-compaction of a formulation containing water and at least one hydraulic binder, **characterized in that** the said formulation also contains aggregates.

7. Use according to one of claims 1 to 6, of a rheological additive, in a process of manufacture by vibro-compaction of a formulation containing water and at least one hydraulic binder, **characterized in that** the said formulation further contains another additive chosen from among a plasticizer, a superplasticizer, a dispersing agent, an anti-foaming agent, or their blends.

8. Use according to one of claims 1 to 7, of a rheological additive, in a process of manufacture by vibro-compaction of a formulation containing water and at least one hydraulic binder, **characterized in that** the said process comprises:
1) a stage of manufacture of a formulation containing at least one hydraulic binder, water, optionally aggregates and optionally other additives chosen from among a plasticizer, a superplasticizer, a dispersing agent, an anti-foaming agent or their blends, by blending of these different constituents,
2) a stage of aging the formulation after blending,
3) a stage of introduction of the said formulation into a mould,
4) a stage which is a combination of a compression action and a vibration action exerted on the mould,
5) a stage of removal from the mould of the part obtained following stage 4).

9. Use according to one of claims 1 to 8, of a rheological additive, in a process of manufacture by vibro-compaction of a formulation containing water and at least one hydraulic binder, **characterized in that** said hydraulic binder is selected among from lime, cement, plaster, fly ashes, blast furnace slags, soluble silicates, clays, zeolithes and mixtures thereof.

10. Formulation containing water and at least one hydraulic binder, together with a rheological additive **characterized in that** it is an emulsion of at least one non-cross-linked copolymer consisting of:
a) (meth)acrylic acid,
b) alkyl (meth)acrylate having 1 to 25 carbon atoms, preferentially 1 to 4 carbon atoms, in which this alkyl methacrylate is preferentially ethyl (meth)acrylate,
c) a monomer of formula R₁ - (R₂O)ₘ - R₃, in which:
- R₁ designates a radical containing an unsaturated polymerizable function, belonging to the group of vinylics, as well as to the group of acrylic, methacrylic, maleic esters, as well as to the group of unsaturated urethanes such as acrylurethane, methacrylurethane, α-α' dimethyl-isopropenyl-benzylurethane, allylurethane, as well as to the group of allylic or vinylic ethers, whether or not substituted, or again to the group of ethylenically unsaturated amides or imides, or again to the group constituted by acrylamide and methacrylamide, and preferentially methacrylic,
- R₂O designates an alkylene oxide group having 1 to 6 carbon atoms, preferentially an ethylene oxide and propylene oxide group, very preferentially an ethylene oxide group,
- m is an integer comprised between 20 and 30, preferentially between 23 and 27, and is very preferentially equal to 25,
- R₃ designates a linear or branched alkyl chain having 28 to 33 carbon atoms, preferentially 30 to 33 carbon atoms, and having very preferentially 32 carbon atoms.

11. Formulation according to claim 12, **characterized in that** the said non-cross-linked copolymer consists, expressed as a percentage by weight of each of the constituents (the total a + b + c is equal to 100%) of:
a) 25% to 60%, preferentially 30% to 50% of (meth)acrylic acid,
b) 40% to 75%, preferentially 50% to 70% of alkyl (meth)acrylate having 1 to 25 carbon atoms, preferentially 1 to 4 carbon atoms, where this alkyl methacrylate is preferentially ethyl (meth)acrylate,
c) 1% to 20%, preferentially 5% to 15% of a monomer of formula R₁ - (R₂O)ₘ - R₃, in which:
- R₁ designates a radical containing an unsaturated polymerizable function, belonging to the group of vinylics, or to the group of acrylic, methacrylic, maleic esters, as well as to the group of unsaturated urethanes such as acrylurethane, methacrylurethane, α-α' dimethyl-isopropenyl-benzylurethane, allylurethane, as well as to the group of allylic or vinylic ethers, whether or not substituted, again to the group of ethylenically unsaturated amides or imides, or again to the group constituted by acrylamide and methacrylamide, and preferentially methacrylic,
- R₂O designates an alkylene oxide group having 1 to 6 carbon atoms, preferentially an ethylene oxide and propylene oxide group, very preferentially an ethylene oxide group,
- m is an integer comprised between 20 and 30, preferentially between 23 and 27, and is very preferentially equal to 25,
- R₃ designates a linear or branched alkyl chain having 28 to 33 carbon atoms, preferentially 30 to 33 carbon atoms, and having very preferentially 32 carbon atoms.

12. Formulation according to one of claims 10 or 11, **characterized in that** the said non-cross-linked copolymer is totally or partially neutralized by at least one neutralization agent, chosen from among the hydroxides and/or oxides of calcium, magnesium, lithium, barium, the hydroxides of sodium, potassium, or ammonium hydroxide, the primary, secondary or tertiary amines, or their blends.

13. Formulation according to one of claims 10 to 12, containing water and at least one hydraulic binder, together with a rheological additive, **characterized in that** the water/hydraulic binder (W/B) ratio is strictly higher than 0.25, preferentially 0.30, very preferentially 0.35.

14. Formulation according to one of claims 10 to 13, containing water and at least one hydraulic binder, together with a rheological additive, **characterized in that** it contains 0.05% to 3%, preferentially 0.1% to 2%, very preferentially 0.1% to 1.5% by dry weight of the said rheological additive, relative to the dry weight of hydraulic binder.

15. Formulation according to one of claims 10 to 14, containing water and at least one hydraulic binder, together with a rheological additive, **characterized in that** it also contains aggregates.

16. Formulation according to one of claims 10 to 15, containing water and at least one hydraulic binder, together with a rheological additive, **characterized in that** it also contains another additive chosen from among a plasticizer, a superplasticizer, a dispersing agent, an anti-foaming agent, or their blends.

17. Formulation according to one of claims 10 to 16, containing water and at least one hydraulic binder, together with a rheological additive, **characterized in that** it is obtained by a process of vibro-compaction comprising:
1) a stage of manufacture of a formulation containing at least one hydraulic binder, water, possibly aggregates and possibly other additives chosen from among a plasticizer, a superplasticizer, a dispersing agent, an anti-foaming agent or their blends, by blending of these different constituents,
2) a stage of aging the formulation after blending,
3) a stage of introduction of the said formulation into a mould,
4) a stage which is a combination of a compression action and a vibration action exerted on the mould,
5) a stage of removal from the mould of the part obtained following stage 4).

18. Formulation according to one of claims 10 to 17, containing water and at least one hydraulic binder, together with a rheological additive, **characterized in that** said hydraulic binder is selected among from lime, cement, plaster, fly ashes, blast furnace slags, soluble silicates, clays, zeolithes and mixtures thereof.
